# EUROPEAN PATENT APPLICATION

(11) **EP 4 773 597 A1**
(43) Date of publication of application: **08.07.2026**
(21) Application number: 25305003.3
(22) Date of filing: 02.01.2025
(51) Int. Cl.: H04N 19/105, H04N 19/11, H04N 19/176, H04N 19/593, H04N 19/70

(54) **TEMPLATE BASED MULTIPLE REFERENCE LINES MODE USING MODE LIST AND REFERENCE LINE LIST**

(71) Applicant: InterDigital CE Patent Holdings, SAS, 75017 Paris (FR)
(72) Inventor: RATH, Gagan Bihari, 35000 RENNES (FR); URBAN, Fabrice, 35235 THORIGNE-FOUILLARD (FR); NASER, Karam, 35250 MOUAZE (FR); CHEN, Ya, 35700 RENNES (FR)
(74) Representative: Interdigital

(57) **Abstract**

A method comprising:
obtaining (800) a current block of a picture;
deriving (801) a first list of a first number of intra prediction modes;
generating (802) a prediction of a template of samples in a neighborhood of the current block for each intra prediction mode of the first list;
for each predictor, obtaining (803) a prediction error between the predictor and the template;
obtaining (804) a second list of reference lines in a neighborhood of the current block and forming a TMRL list of a second number of template based multiple reference lines (TMRL) candidates by browsing the intra prediction modes of the first list in ascending order of the prediction error and browsing the reference lines of the second list from a nearest reference line to a furthest reference line, each TMRL candidate of the TMRL list comprising an intra prediction mode extracted from the first list during the browsing the first list and a reference lines extracted from the second list extracted during the browsing of the second list; and,
determining (805) a TMRL predictor for the current block from the TMRL candidates of the TMRL list.

## Description

### BACKGROUND

The present application is related to the domain of prediction of motion information in video compression.

To achieve high compression efficiency, video coding schemes usually employ predictions and transforms to leverage spatial and temporal redundancies in a video content. During an encoding, pictures of the video content are divided into blocks of pixels, these blocks being then partitioned into one or more sub-blocks, called original sub-blocks in the following. An intra or inter prediction is then applied to each sub-block to exploit intra or inter picture correlations. Whatever the prediction method used (intra or inter), a predictor sub-block is determined for each original sub-block. Then, a sub-block representing a difference between the original sub-block and the predictor sub-block, often denoted as a prediction error sub-block, a prediction residual sub-block or simply a residual sub-block, is transformed, quantized and entropy coded to generate an encoded video stream. To reconstruct the video, the compressed data is decoded by inverse processes corresponding to the transform, quantization and entropic coding.

Intra and inter prediction are continuously evolving with improvements of existing prediction tools or appearance of new prediction tools.

One new intra prediction tool appeared recently is template based multiple reference line (TMRL) prediction. TMRL aims at predicting a block based on multiple reference lines. TMRL is an enhancement of a tool called MRL that aims to predict a block with any one of three adjacent reference lines. TMRL increases the number of reference lines to six including the immediately adjacent reference line. In some implementations, MRL is applied only to non-planar intra prediction modes in a list of most probable intra prediction modes with the two non-adjacent reference lines. In TMRL, ten non-planar intra prediction modes are shortlisted, which are then used with the five non-adjacent reference lines to predict the first reference line (i.e. the adjacent reference line). Out of the fifty combinations of non-planar prediction modes and non-adjacent reference lines, the twenty best candidates resulting in a minimum prediction error are used to construct a TMRL list. The derivation of the TMRL list is thus quite complex and can be compute-intensive for a decoder.

It is desirable to propose solutions to reduce the complexity of the derivation of the TMRL list.

### BRIEF SUMMARY

In a first aspect, one or more of the present embodiments provide a method comprising:
obtaining a current block of a picture;
deriving a first list of a first number of intra prediction modes;
generating a prediction of a template of samples in a neighborhood of the current block for each intra prediction mode of the first list;
for each predictor, obtaining a prediction error between the predictor and the template;
obtaining a second list of reference lines in a neighborhood of the current block and forming a TMRL list of a second number of template based multiple reference lines (TMRL) candidates by browsing the intra prediction modes of the first list in ascending order of the prediction error and browsing the reference lines of the second list from a nearest reference line to a furthest reference line, each TMRL candidate of the TMRL list comprising an intra prediction mode extracted from the first list during the browsing of the first list and a reference lines extracted from the second list extracted during the browsing of the second list; and,
determining a TMRL predictor for the current block from the TMRL candidates of the TMRL list.

In a second aspect, one or more of the present embodiments provide a device comprising electronic circuitry configured for:
obtaining a current block of a picture;
deriving a first list of a first number of intra prediction modes;
generating a prediction of a template of samples in a neighborhood of the current block for each intra prediction mode of the first list;
for each predictor, obtaining a prediction error between the predictor and the template;
obtaining a second list of reference lines in a neighborhood of the current block and forming a TMRL list of a second number of template based multiple reference lines (TMRL) candidates by browsing the intra prediction modes of the first list in ascending order of the prediction errors and browsing the reference lines of the second list from a nearest reference line to a furthest reference line, each TMRL candidate of the TMRL list comprising an intra prediction mode extracted from the first list during the browsing the first list and a reference lines extracted from the second list extracted during the browsing of the second list; and,
determining a TMRL predictor for the current block from the TMRL candidates of the TMRL list.

In an embodiment of the first or the second aspect, the forming of the TMRL list comprises looping over the reference lines of the second list from the nearest reference line to the furthest reference line and for each reference line, looping over the intra prediction modes of the second list in ascending order of the prediction errors until obtaining the second number of TMRL candidates.

In an embodiment of the first or the second aspect, the forming of the TMRL list comprises looping over the intra prediction modes of the first list in ascending order of the prediction errors and for each intra prediction mode, looping over the reference lines from the nearest reference line to the furthest reference line until obtaining the second number of TMRL candidates.

In an embodiment of the first or the second aspect, a third number of intra prediction modes browsed in the first list for forming the TMRL candidates depends on a fourth number of available reference lines and on the reference lines.

In an embodiment of the first or the second aspect, the forming of the TMRL list is based on relative values of the prediction errors of the intra prediction modes of the first list.

In an embodiment of the first or the second aspect, the forming of the TMRL list is based on probabilities of TMRL candidates determined offline in function of frequencies of use of the TRML candidates.

In an embodiment of the first or the second aspect, at least one of the first number, the second list of reference lines and the second number depends on a size of the current block.

In a third aspect, one or more of the present embodiments provide a method comprising:
obtaining a current block of a picture;
obtaining a size of the current block;
deriving a first list of a first number of intra prediction modes;
obtaining a second list of a second number of supplemental reference lines in a neighborhood of the current block, the supplemental reference lines of the second list being different from a closest reference line in the neighborhood of the current block;
for each combination of an intra prediction mode of the first list and a supplemental reference line of the second list, computing a prediction error between the closest reference line and a predictor of the closest reference line obtained from the intra prediction mode and the supplemental reference line of the combination; and forming a template based multiple reference lines (TMRL) list of a third number of TMRL candidates by keeping a third number of combinations with the least prediction errors; and
determining a TMRL predictor for the current block from the TMRL candidates of the TMRL list;
wherein at least one of the first number, the second list and the third number depends on the size of the current block.

In a fourth aspect, one or more of the present embodiments provide a device comprising electronic circuitry configured for:
obtaining a current block of a picture;
obtaining a size of the current block;
deriving a first list of a first number of intra prediction modes;
obtaining a second list of a second number of supplemental reference lines in a neighborhood of the current block, the supplemental reference lines of the second list being different from a closest reference line in the neighborhood of the current block;
for each combination of an intra prediction mode of the first list and a supplemental reference line of the second list, computing a prediction error between the closest reference line and a predictor of the closest reference line obtained from the intra prediction mode and the supplemental reference line of the combination; and forming a template based multiple reference lines (TMRL) list of a third number of TMRL candidates by keeping a third number of combinations with the least prediction errors; and
determining a TMRL predictor for the current block from the TMRL candidates of the TMRL list;
wherein at least one of the first number, the second list and the third number depends on the size of the current block.

In an embodiment of the third or the fourth aspect, the combinations of the TMRL list are sorted in ascending order of their prediction errors.

In an embodiment of the first, the second, the third or the fourth aspect, no decoder side intra mode derivation (DIMD) intra prediction modes is used for forming the TMRL list.

In an embodiment of the first, the second, the third or the fourth aspect, a use of a TMRL predictor is enabled by signaling a syntax element in a slice header, or a picture header, or a sequence header.

In a fifth aspect, one or more of the present embodiments provide a non-transitory information storage medium storing program code instructions for implementing the first, second third or fourth aspect.

In a sixth aspect, one or more of the present embodiments provide a computer program comprising program code instructions for implementing the method of the first, second, third or fourth aspect.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A describes an example of a context in which following embodiments can be implemented;
FIG. 1B is a block diagram illustrating an example system according to one or more embodiments of the present disclosure;
FIG. 2 illustrates an example of partitioning undergone by an image of pixels of an original video;
FIG. 3 is a block diagram illustrating an example video encoder according to one or more embodiments of the present disclosure;
FIG. 4 is a block diagram illustrating an example video decoder according to one or more embodiments of the present disclosure;
FIG. 5 illustrates example of reference lines used in TMRL;
FIG. 6A and 6B illustrates schematically DIMD;
FIG. 7 illustrates schematically TIMD;
FIG. 8 illustrates schematically a first embodiment of an alternative method for generating a TMRL candidate list; and,
FIG. 9 illustrates schematically a second embodiment of an alternative method for generating a TMRL candidate list.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

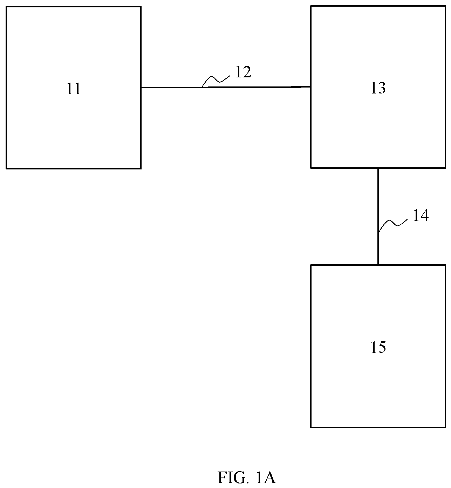

**FIG. 1A** describes an example of a context in which following embodiments can be implemented.

In FIG. 1A, a system 11, that could be a camera, a storage device, a computer, a server or any device capable of delivering a video stream, transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display 15 are comprised in a TV, a computer, a tablet, a smartphone, a head-mounted display, etc.

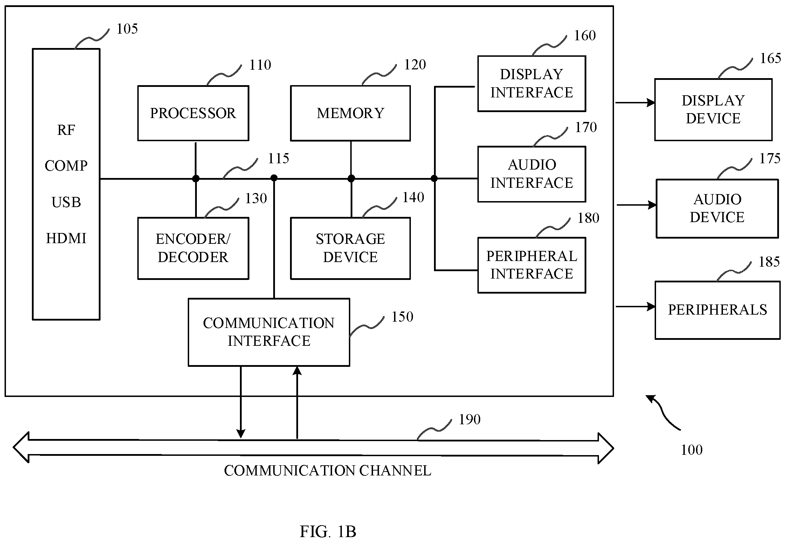

**FIG. 1B** illustrates an example of system 100 implementing the system 11 or the system 13 in which embodiments of the present disclosure can be implemented.

The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces. All these types of processors are electronic circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process raw video data/encoded video data and to provide encoded video data/decoded video data. The encoder/decoder module 130 may include one or more processors and/or memory (not shown). Although FIG. 1B depicts the encoder/decoder module 130 as a separate element of system 100, it will be understood that the processor 110 and the encoder/decoder module 130 may be collocated and/or integrated together as a combination of hardware and/or software, e.g., in an electronic package, circuitry or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input raw video data, reconstructed video data, decoded video data or portions thereof, bitstreams, chunks, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190 (corresponding to communication channel 12 or 14 in FIG. 1A). The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT (Over The Top) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

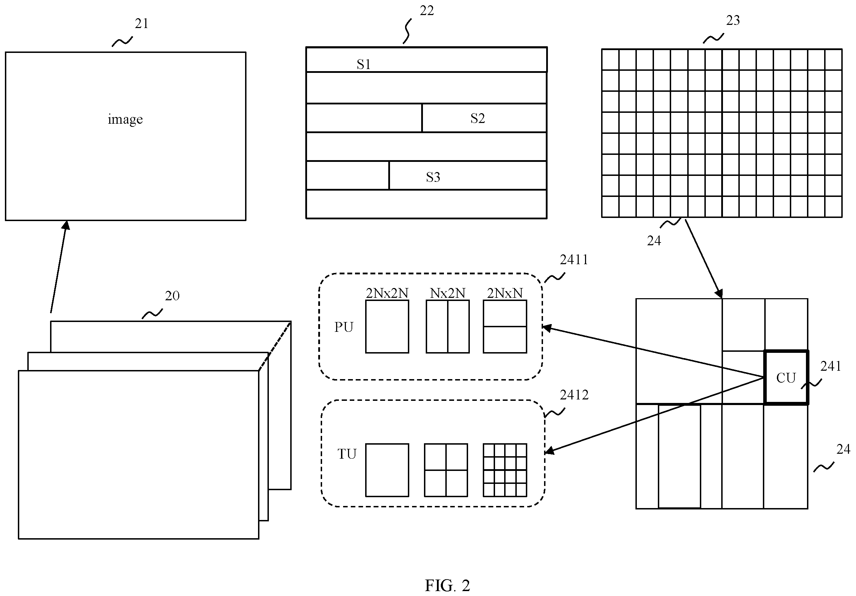

FIGS. 2, 3 and 4 introduce an example of video format.

**FIG. 2** illustrates an example of partitioning undergone by a picture of pixels 21 of an original video sequence 20. It is considered here that a pixel is composed of three components: a luminance component Y and two chrominance components U and V (also denoted herein by Cb and Cr). Other types of pixels are however possible comprising less or more components such as only a luminance component or an additional depth component or transparency component.

A picture is divided into a plurality of coding entities. First, as represented by reference 23 in FIG. 2, a picture is divided in a grid of blocks called coding tree units (CTU). A CTU consists of an N×N block of luminance samples together with two corresponding blocks of chrominance samples. N is generally a power of two. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile.

In the example in FIG. 2, as represented by reference 22, the picture 21 is divided into three slices S1, S2 and S3 of the raster-scan slice mode, each comprising a plurality of tiles (not represented), each tile comprising only one brick.

As represented by reference 24 in FIG. 2, a CTU may be partitioned into the form of a hierarchical tree of one or more sub-blocks called coding units (CU). The CTU is the root (i.e. the parent node) of the hierarchical tree and can be partitioned in a plurality of CU (i.e. child nodes). Each CU becomes a leaf of the hierarchical tree if it is not further partitioned in smaller CU or becomes a parent node of smaller CU (i.e. child nodes) if it is further partitioned.

In the example of FIG. 2, the CTU 24 is first partitioned in "4" square CU using a quadtree type partitioning. The upper left CU is a leaf of the hierarchical tree since it is not further partitioned, i.e. it is not a parent node of any other CU. The upper right CU is further partitioned in "4" smaller square CU using again a quadtree type partitioning. The bottom right CU is vertically partitioned in "2" rectangular CU using a binary tree type partitioning. The bottom left CU is vertically partitioned in "3" rectangular CU using a ternary tree type partitioning.

During the coding of a picture, the partitioning is adaptive, each CTU being partitioned so as to optimize a compression efficiency of the CTU criterion.

In HEVC appeared the concept of prediction unit (PU) and transform unit (TU). Indeed, in HEVC, the coding entity that is used for prediction (i.e. a PU) and transform (i.e. a TU) can be a subdivision of a CU. For example, as represented in FIG. 2, a CU of size 2Nx2N, can be divided in PU 2411 of size N×2N or of size 2N×N. In addition, said CU can be divided in "4" TU 2412 of size N×N or in "16" TU of size (N/2)x(N/2).

One can note that in VVC, except in some particular cases, frontiers of the TU and PU are aligned on the frontiers of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

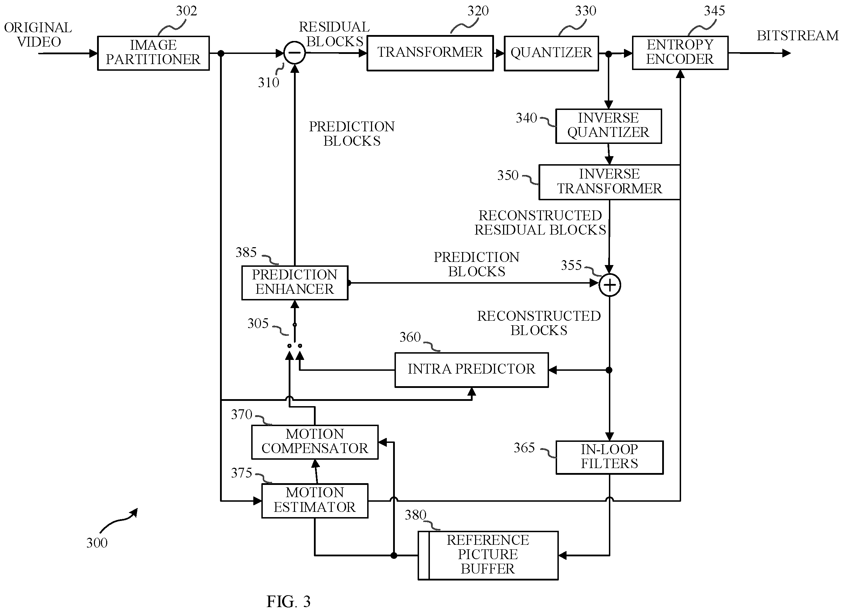

**FIG. 3** is a block diagram illustrating an example video encoder 300 that may be employed by the system 100 (e.g., via the encoder/decoder module 130) described with respect to FIG. 1B. The video encoder 300 may be an encoder that employs video compression technologies, standards, specification, or protocols, including Advanced Video Coding (AVC, ITU-T H.264/MPEG-4), High Efficiency Video Coding (HEVC, ITU-T H.265), Versatile Video Coding (VVC, ITU-T H.266), Essential Video Coding (EVC, MPEG-5), AOMedia Video 1 (AV1), AV2, VP9, or the Enhanced Compression Model (ECM) (Enhanced compression model) as described in document JVET AI2025: Algorithm description of Enhanced Compression Model 14 (ECM 14) / Joint Video Experts Team (JVET) of ITU-TSG 16 WP 3 and ISO/IEC JTC 1/SC 29, 35th Meeting, Sapporo, JP, 12-19 July 2024*,* and variations or improvements thereof. Those skilled in the art will understand that the various embodiments described herein are not limited to a specific standard and can be applied to other standards and recommendations, as well as extensions thereof.

Referring generally to FIG. 3 and the video encoder 300, video data (e.g., one or more video pictures) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame or picture) to be encoded is partitioned into CUs (blocks, macroblock, CTU, PU, TU, etc) by an image partitioner 302 as described in relation to FIG. 2.

In general, a block includes a luma block and associated chroma blocks. As such, functions of the video encoder 300 described herein as applied to a block refer generally to the luma block and the respective chroma blocks.

A block may be encoded using an intra prediction mode performed by an intra predictor 360. In intra prediction mode, the content of a block in a picture is predicted based on content from one or more other blocks of the same picture (or region), using reconstructed blocks output from an adder 355.

Intra prediction is applied in All-Intra pictures as well as in intra blocks in Inter pictures, where a target block is spatially predicted from causal neighbor blocks in the same picture, i.e., the blocks on the top and top-right, the blocks on the left and left-bottom, and the top-left block. Based on reconstructed pixel values in these blocks, the encoder constructs different predictions for the target block and chooses the one that leads to the best rate-distortion (RD) performance. In some implementations, the predictions are tested for "67" prediction modes, which include one PLANAR mode (indexed as mode "0"), one DC mode (indexed as mode "1"), and remaining 65 angular modes.

The family of intra prediction modes is continuously evolving with improvements of existing modes or appearance of new modes. These new modes comprise matrix based intra prediction (MIP), template based multiple reference line prediction (TMRL), Decoder side intra mode derivation and fusion (DIMD), template based intra mode derivation and fusion (TIMD), Spatial geometric partition mode (SGPM), Intra template matching (IntraTmp), etc., besides the "67" prediction modes to arrive at the best prediction for a target block in terms of RD performances. These tools estimate one or more prediction modes or predictions based on already decoded causal pixels so that the decoder can also estimate the same prediction modes or predictions as the encoder. Then the encoder signals only a dedicated flag (e.g., *timdFlag, tmrlFlag, dimdFlag,* etc) to indicate the chosen prediction mode. As the prediction direction itself is not encoded, some of these tools (e.g., TMRL and TIMD) use higher angular resolution ("131" prediction modes instead of "67") to improve the prediction accuracy further.

**Multiple reference lines (MRL)** is one prediction mode appeared in VVC. In MRL, an MRL candidate list is generated and consists of "2" additional reference lines (i.e., reference line "1" (the second closest reference line), reference line "2" (the third closest reference line)). Each of these lines is tested for prediction with prediction modes from a list of Most Probable Modes (i.e., MPM list) excluding the PLANAR mode. The chosen reference line index is encoded with a syntax element *multiRefIdx* where *multiRefIdx* can be "0", "1", or "2". The prediction is not fused, that is, it is based on a single reference line.

In document JVET-Y0116 (EE2-2. 1: Extended MRL candidate list, Keming Cao, Yao-Jen Chang, Bappaditya Ray, Vadim Seregin, Marta Karczewicz, Joint Video Experts Team (JVET) of ITU-T SG 16 WP 3 and ISO/IEC JTC 1/SC 29, 25th Meeting, by teleconference, 12-21 January 2022*)* an extended MRL candidate list was proposed. The extended MRL allows using more reference lines for intra prediction. In particular, the MRL candidate list is extended from {reference line 1, reference line 2} to {reference line 1, reference line 3, reference line 5, reference line 7, reference line 12} for regular intra prediction.

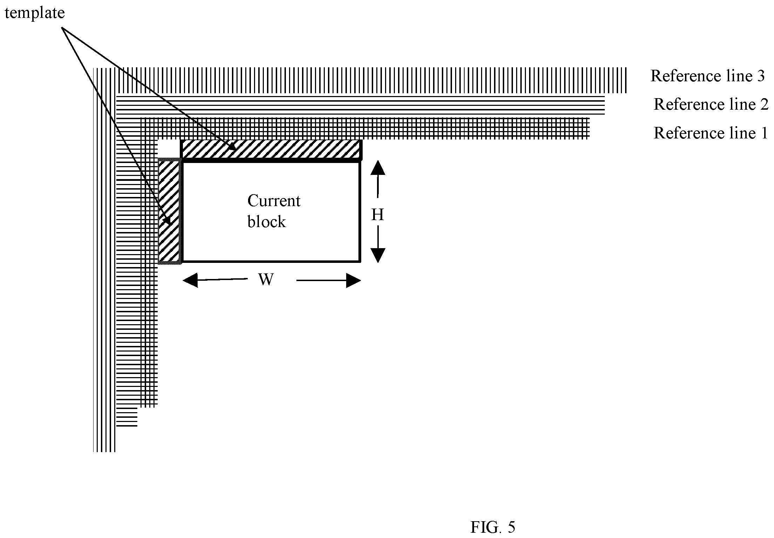

**Template based MRL (TMRL)** adopted in ECM includes the following aspects:
a) the extended reference line candidate list and the intra-prediction-mode candidate list:
The extended reference line candidate list is {reference line 1, reference line 3, reference line 5, reference line 7, reference line 12}.. A list of intra prediction modes (i.e., the intra-prediction-mode candidate list) of size "10" is defined. A construction of the intra-prediction-mode candidate list is similar to a construction of a list of MPM. The differences are that (1) PLANAR mode is excluded from the proposed intra-prediction-mode candidate list, (2) DC mode is added after "5" neighboring PUs' modes and DIMD modes if they are not already included, (3) The angular modes (already listed) with delta angles from ±1 to ±4 (compared the existing angular modes in the intra-prediction-mode candidate list) are added if the list of modes has less than 10 candidates. If the intra-prediction-mode candidate list's size is still less than "10", modes from a default list of "21" intra modes, which are used to construct a primary most probable mode (MPM) list and a secondary MPM list, are added to the list if not already included.
With "5" extended reference lines and "10" intra prediction modes, there are 5x10=50 combinations of the extended reference line and the allowed intra-prediction modes for a block. Since the extended reference line starts from reference line "1", the area covered by reference line "0" is used for template matching. SAD costs over the template area (see **FIG. 5**) are calculated between the predictions (generated by "50" combinations) and the reconstructions. Only the first "20" combinations with the least SAD cost are kept from the combinations in an ascending order to form a combination candidate list, called the TMRL candidate list.
b) Signaling of TMRL
Instead of coding the reference line and the intra mode separately, an index to the TMRL candidate list is coded to indicate which combination of reference line and prediction mode is used for coding the current block. In the proposed TMRL mode, a truncated Golomb-Rice coding with a divisor "4" is employed to code selected combinations from the TMRL candidate list. The binarization process and the codewords are shown in Table TAB1.

**Table TAB1**

| Index | Bin string (prefix) | Bin string (suffix) |
|---|---|---|
| 0 | 0 | 00 |
| 1 | 0 | 01 |
| 2 | 0 | 10 |
| 3 | 0 | 11 |
| 4 | 10 | 00 |
| ... | ... | ... |
| 18 | 1111 | 10 |
| 19 | 1111 | 11 |

c) Encoder-side modifications
Encoder-side modification is tested to further improve the coding efficiency. For intra blocks larger than 8x8, an additional TMRL RDO is added if no TMRL modes are selected by SATD comparison.

In the above, the TMRL prediction consists of single line predictions. In document *J*VET-AB0157 (EE2-1.12: Combination of EE2-1.10 and EE2-1.11, "L. Xu et al, JVET-AB0157-v2, 28th Meeting, Mainz, DE, October 2022*),* a weighted TMRL was proposed. Two predictors generated from two adjacent reference lines were fused by weighted averaging. For angular intra prediction modes including a single mode case of TIMD and DIMD, the proposed method derives intra prediction by weighting intra predictions obtained from multiple reference lines represented as P = *w*₀*Pᵢ* + *w*₁*P*_{*i*+1}, where *Pᵢ* is the intra prediction with a selected reference line from the MRL list, and *P*_{*i*+1} is the prediction with the line above the default reference line. The weights are set as *w*₀=3/4 and *w*₁=1/4. Thus, if the TMRL candidate list is associated with *multiRefIdx* equal to "1" with a prediction mode *v*, the two predictors are obtained with *multiRefIdx* equal to "1" (corresponding to the default reference line) and "2" (corresponding to the line the line above the default reference line) with the same prediction mode v and then fused with weights ¾ and ¼ respectively.

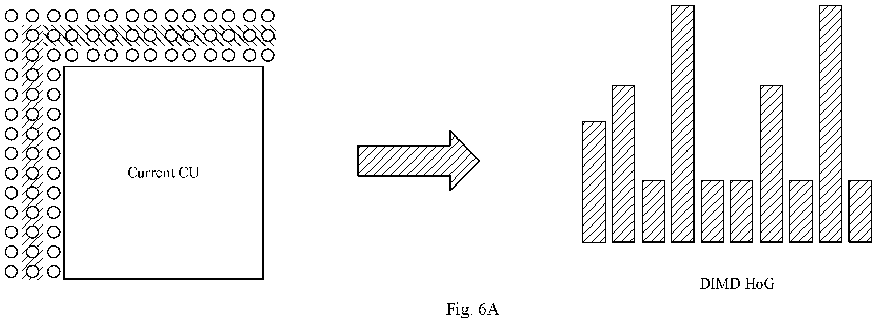

**Decoder side Intra Mode Derivation (DIMD)** is a new tool to derive an intra prediction mode for coding a current block. DIMD relies on an assumption that reconstructed samples surrounding the current block to be predicted carries information to infer a texture directionality in this current block. When DIMD is applied, up to five intra prediction modes among the "65" angular modes, that are likely the best intra prediction modes for predicting the current block, are derived from a Histogram of Oriented Gradients (HoG) computed from the neighbouring samples of the current block. The HoG is computed on a three-samples wide/high L-shaped template formed of already reconstructed samples as represented in **FIG. 6A**. Each bin of the HoG represents a cumulative gradient for a given angular intra prediction mode computed on the template. The predictions with these up to five intra prediction modes are combined (i.e., blended) with a planar mode predictor with weights derived from the HoG.

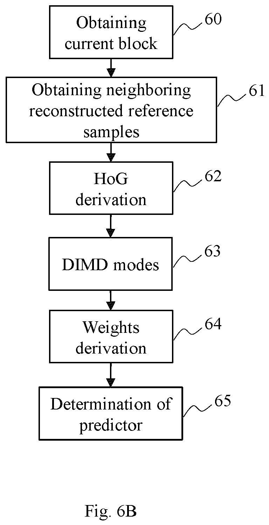

**FIG. 6B** represents a process to derive a DIMD predictor.

The process of FIG. 6B is applied by a processing module that may be the processor 110, or the encoder/decoder 130 of FIG. 1B.

In a step 60, the processing module obtains a current block.

In a step 61, the processing module obtains a three-samples wide/high L-shaped template formed of already reconstructed samples neighbouring the current block. One can note that the shape of the template may be adaptive depending on samples availability.

In a step 62, the processing module derives the Histogram of Oriented Gradients (HoG) from the samples of the template. The HoG is obtained using a Sobel filter, accumulating the magnitudes of all gradients for a given angular intra prediction mode, for all the samples within the dashed region in FIG. 6A.

In a step 63, the processing module selects up to five angular intra prediction modes with highest cumulative gradient in the HoG to obtain DIMD modes. In the following, the angular intra prediction mode with the highest cumulative gradient is called *primary DIMD mode* and the other DIMD modes remaining in the five angular intra prediction modes with highest cumulative gradient are called *DIMD blend modes.*

In a step 64, the processing module determines a weight for each of the selected DIMD modes. Each weight depends on the relative magnitudes of the DIMD modes in the HoG.

In a step 65, the processing module computes a weighted sum of the predictors obtained from each DIMD mode and for the planar mode using the determined weights to obtain a final predictor for the current block.

As the prediction modes are derived using the neighbouring decoded samples, but not the current block information, the decoder can derive the same up to five best prediction modes as the encoder and can compute the prediction as a weighted sum with the planar mode predictor. For each intra-coded block, a flag namely *dimdFlag* indicating whether a DIMD mode is to be applied or not is signalled.

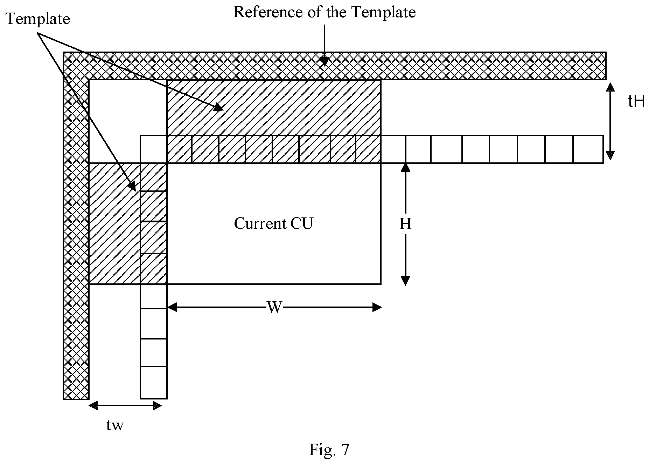

In **template based intra mode derivation and fusion (TIMD),** instead of signalling an intra mode for a current block explicitly using a list of most probable modes (MPMs), the information is derived at both the encoder and the decoder from neighbouring reconstructed samples of the current block. A template (indicated by a patterned region in FIG. 7) specifies a set of already reconstructed samples, which are used to derive the intra mode. The template size is denoted as the number of samples within the template that extends to the above and to the left of the current block. For example, a template size of "2" (i.e., tW = 2 or tH =2 ) is used for 4x4 and 8x8 blocks and a template size of "4" (i.e.,tW=4 or tH=4) is used for 16x16 and larger blocks. In cases, when the left (respectively the top) neighbour block of the current block is not available, the template consists of only the patterned region on top (respectively on left) of the current block.

For each intra prediction mode in an MPM list, the decoder computes a prediction from a reference of the template (indicated in FIG. 7). For each prediction, a Sum of Absolute Transformed Differences (SATD) between the prediction and the original reconstructed samples of the template is calculated. In a first step, two initial intra prediction modes corresponding to the minimum SATD are selected. The first initial intra prediction mode with the lowest SATD is denoted *INIT_IPM*_{*timd_*1*st*} and the initial intra prediction mode corresponding to the second lowest SATD is denoted *INIT_IPM*_{*timd*_2*nd*}. In a second step, these two initial intra prediction modes are refined. For each of these two intra prediction modes, if the initial intra prediction mode is neither planar nor DC, a SATD is computed for the two closest extended directional intra prediction modes (i.e., the two closest prediction directions at sample resolution of (1/64)) of the initial intra prediction mode). Two sets each comprising an initial intra prediction mode (resulting from the first step) and two refined intra prediction modes resulting from the refinement are therefore obtained. In each set, the intra prediction mode minimizing the SATD is selected. The intra prediction mode derived from the mode *INIT_IPM*_{*timd*_1*st*} is denoted *IPM*_{*timd*_1*st*} and the intra prediction mode derived from the mode *INIT_IPM_{timd}_*_{2*nd*} is denoted *IPM*_{*timd_*2}*_{nd}.* Thus, for TIMD, the set of directional intra prediction modes is extended from "65" to "129", by increasing the angle resolution to (1/64). If the SATD of the selected two intra prediction modes satisfies the condition that *SATD*_{*IPM*_*timd*_2*nd*} < 2 * *SATD*_{*IPM*_*timd*_1}*ₛₜ,* the predictions of the current block obtained with these two intra prediction modes are blended together with weights to get a final prediction for the current block. The first prediction is obtained with the first reference line (the top and left reference arrays closest to a target block) whereas the second prediction is obtained with the second reference line (the top and left reference arrays next to the closest). The weights are determined from relative magnitudes of the associated SATDs. Otherwise (*SATD*_{*IPM_timd_*2*nd*} ≥ 2 * *SATD*_{*IPM_timd_*1*st*})*,* only the first intra prediction mode *IPM*_{*timd*_1*st*} is used for the prediction of the current block as the TIMD mode. A dedicated flag called *timd_flag* is signaled by the encoder to indicate if the best prediction was obtained with the TIMD mode. The *timd_flag* is CABAC encoded after a DIMD flag, a MIP flag and an IntraTmp flag. Thus, if a decoder decodes these flags to be all zeros, then it decodes the *timd_flag.* If the flag is "1", then it derives the two TIMD modes *IPM*_{*timd_*1*st*} and *IPM*_{*timd_*2*nd*} exactly in the same manner as the encoder. Then, using the same SATD condition mentioned above, it decides to blend the two predictions or not. If the blending is performed, the blending weights are the same as used by the encoder. If *timd_flag* is decoded to be "0", then the decoder does not derive the TIMD modes.

A block may also or alternatively be encoded using an inter prediction mode, in which motion estimation and motion compensation are performed by a motion estimator 375 and a motion compensator 370, respectively. In inter prediction mode, the content of a block in a picture is predicted based on content from one or more reconstructed areas of reference pictures, available from a reference picture buffer (or decoded picture buffer (DPB) 380). A position of the reconstructed area (or reference area) in the reference picture is generally indicated by motion information. The motion information here includes an uni-directional or bi-directional temporal prediction type, a reference picture index within each reference picture list and (a) motion vector(s). Said motion information is used during the motion compensation 370 during which a residual block is calculated in the form of a difference between a predicted block and the reference area. One can note that for blocks predicted using a bi-temporal prediction (i.e., bi-predicted blocks), two reference areas are used to predict the block, each reference area being identified by its own motion information.

Two processes are employed to encode the motion information: AMVP (Adaptive Motion Vector Prediction) or Merge. In each process, the motion vectors are predicted.

Similarly to the family of intra prediction modes, the family of inter prediction modes is continuously evolving an improving.

The video encoder 300 selects or otherwise determines at 305 which prediction mode (intra prediction mode and/or inter prediction mode) to use for encoding a CU. The selection is generally based on a rate/distortion optimization criterion (i.e. RDO criterion). The selected prediction mode may be enhanced (e.g., filtered) by a prediction enhancer 385. Based on the selected mode, a prediction for the CU is generated. A residual block is determined based on the prediction (i.e., prediction block, predicted CU) and the input CU. In some embodiments, such determination is made by a subtractor 310.

The residual block or a partition thereof (e.g., a transform block) is transformed into transform coefficients by a transformer 320. The transform coefficients are quantized by a quantizer 330. An entropy encoder 345 performs entropy encoding of the quantized transform coefficients and coding parameters (e.g., syntax elements including motion vectors and other control data) to form a bitstream of coded video data.

In addition to coding the original video blocks as described herein, the video encoder 300 reconstructs the coded blocks to provide references for future predictions. Thus, quantized transform coefficients (from the quantizer 330) are de-quantized by an inverse quantizer 340, and inverse transformed by an inverse transformer 350, to reconstruct (decode) the residual blocks. The reconstructed residual blocks and prediction blocks are combined (e.g., by the adder 355) to form reconstructed blocks. Thus, the video encoder 300 performs decoding operations through which the encoded images (pictures) are reconstructed.

In-loop filters 365 may be applied to the reconstructed image (formed by the reconstructed blocks). The filtered reconstructed image(s) are stored in the DPB 380 and used by the motion estimator 375 and motion compensator 370, as explained above. The in-loop filters 365 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

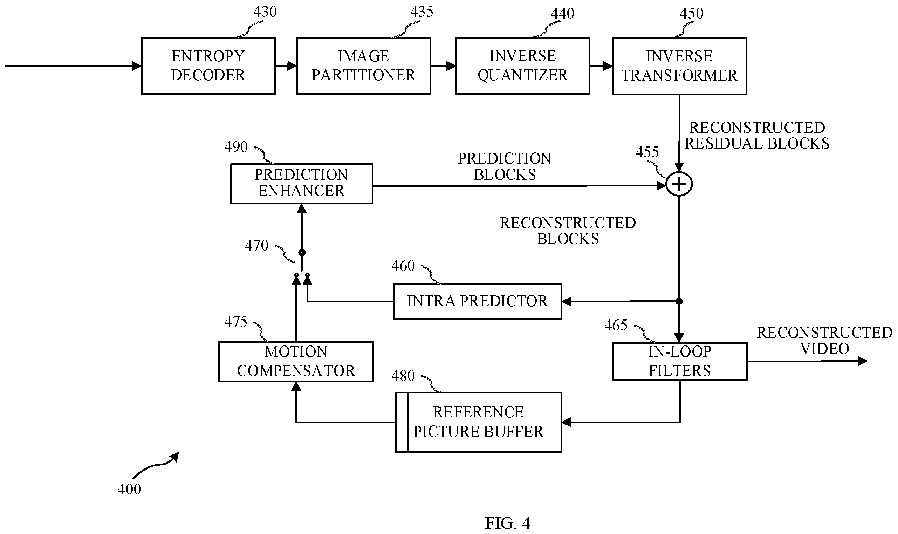

**FIG. 4** is a block diagram illustrating an example of video decoder 400 that may be employed by the system 100 (e.g., via the encoder/decoder module 130) described with respect to FIG. 1B. Generally, operational features of the video decoder 400 are reciprocal to operational features of the video encoder 300. In the video decoder 400, a coded video bitstream (e.g., generated by the video encoder 300 or another video encoding device or process) is entropy-decoded by an entropy decoder 430 to obtain transform coefficients, motion vectors, and other coding parameters. Based on the coding parameters, an image partitioner 435 divides the picture accordingly. The quantized transform coefficients are de-quantized by an inverse quantizer 440 and inverse transformed by an inverse transformer 450 to decode (reconstruct) respective residual blocks. Depending on the selected prediction mode, a predicted block can be obtained at 470 from an intra predictor 460 (i.e., intra prediction) or from a motion compensator 475 (i.e., inter prediction) and may be enhanced (e.g., filtered) by a prediction enhancer 490, generating a prediction block. The reconstructed residual blocks are combined with prediction blocks (e.g. by an adder 455), resulting in reconstructed blocks.

In-loop filters 465 (e.g., DBF, BIF, SAO, and/or ALF) can be applied to the reconstructed image (formed by the reconstructed blocks), to output reconstructed (decoded) video. The filtered reconstructed image is also stored in a reference picture buffer 480 for reference by the motion compensator 475.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 3. The post-decoding processor can use metadata derived by the pre-encoding processor and/or signaled in the video bitstream.

As seen above, the derivation of the TMRL candidate list is quite complex and can be compute-intensive for the decoder. Solutions for reducing this complexity would be welcome.

In the following, several methods are proposed for reducing the complexity in TMRL candidate list creation.

In a first method, it is proposed to remove the prediction of the first reference line using the five other reference lines. Instead, the prediction modes of the intra-prediction-mode candidate list of size "10" are sorted, and then the candidates in the TMRL candidate list are rearranged giving preference to the nearest reference lines over the farther ones.

In a second method, it is proposed to have variable number of candidates in the TMRL candidate list where the number of candidates depends on the current block size. This second method can be implemented independently of the first method.

In another method, it is proposed to combine the first and the second method.

As explained above, the TMRL tool involves a creation of a TMRL candidate list of twenty candidates where each candidate is a pair consisting of a reference line index and an intra prediction mode.

In a first step, intra prediction modes are chosen from the modes of adjacent and non-adjacent neighboring blocks, the primary DIMD mode and the first DIMD blend mode (i.e., the DIMD blend mode with the highest cumulative gradient). Depending on how many of them are distinct, only up to "10" intra prediction modes are kept. If the number of kept intra prediction modes is less than "10", angular modes with delta angles from ±1 to ±4 (compared the existing angular modes in the intra-prediction-mode candidate list) are appended to the intra-prediction-mode list. If the total is still less than "10", intra prediction modes from a default list of "21" intra prediction modes, which are used for the construction of a primary and a secondary MPM lists (see section 3.1.3 of document JVET-AI2025) are added to the list of modes if not already included.

In the second step, depending on the number of available reference lines, up to five reference lines indexed as reference lines "1", "3", "5", "7", and "12" are used with the "10" prediction modes to predict a template consisting of parts of the first reference line (as shown in FIG. 5, that is, the parts of the reference line with index "0" on top and left of the current block). A pair consisting of a reference line index and an intra prediction prediction mode, that is, (*n*, *v*) where *n* is the reference line index and v is the intra prediction mode, is entered in the TMRL list in ascending order of SAD cost resulting from the prediction.

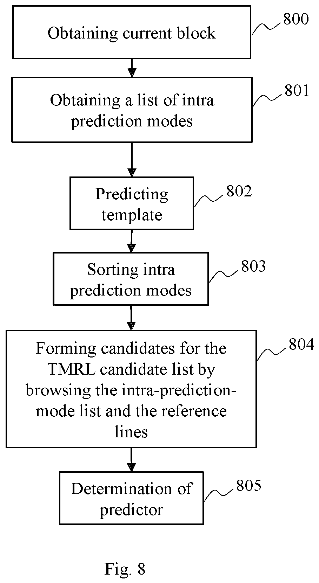

**FIG. 8** illustrates schematically a first embodiment of an alternative method for generating a TMRL candidate list.

The method of FIG. 8 is executed by the processor 110 when implementing the encoding process of FIG. 3 or by the processor 110 when implementing the decoding process of FIG. 4 or by the encoder 130 implementing the encoding process of FIG. 3 or the decoder 130 implementing the decoding process of FIG. 4. In the following the processor 110, the encoder 130 and the decoder 130 are simply called the *processing module.*

In a step 800, the processing module obtains a current block of a picture.

In a step 801, the processing module derives an intra-prediction-mode list. To do so, prediction modes are chosen from the intra prediction modes of the adjacent and non-adjacent blocks of the current block, the primary DIMD mode and the first DIMD blend mode. If the number of distinct modes is not equal to "10", angular modes with delta angles from ±1 to ±4 (compared the existing angular modes in the intra-prediction-mode candidate list) are added. If the total number of modes is still less than "10", modes from the default list of "21" modes are added to the list if not already included.

In a step 802, the processing module generates a prediction of a template (i.e., a template of samples) around (in the neighborhood) the current block for each of the "10" intra prediction modes as in TIMD.

In a step 803, the processing module computes a SAD (Sum Of Absolute Difference) between each predictor and the template and sort the intra prediction modes of the intra-prediction-mode list in ascending order of their SAD (i.e., from the intra prediction mode providing the best prediction to the intra prediction mode providing the worst prediction). One can note that the SAD represents a prediction error between a predictor of the template and the template and that other error metrics can be used instead of the SAD.

In a step 804, the processing module obtains a list of reference lines around the current block and forms a TMRL candidate list by browsing the intra-prediction-mode list in ascending order of SAD and the reference lines from the nearest reference line to the furthest reference line.

In a first embodiment of step 804, the processing module loops over the reference lines from the nearest reference line to the furthest reference line and for each reference line, loops over the intra prediction modes of the intra-prediction-mode list in ascending order of SAD until obtaining "20" TMRL candidates (i.e., "20" couples of a reference line and an intra prediction mode). If (v1, v2,,...,v10) represent the "10" intra prediction modes, and (r1, r2,,...,r5) represents "5" reference lines (where r1, r2, r3, r4, r5 are for example respectively reference line 1, reference line 3, reference line 5, reference line 7, reference line 12), the TMRL candidate list obtained according to the first is as follows ((r1,v1), (r1, v2),....(r1,v10), (r2,v1)..., (r2, v10)).

The number of intra prediction modes of the intra-prediction-mode list considered for each reference line depends on the number of available reference lines and on the reference line.

Table TAB2 provides an example of numbers of intra prediction modes of the intra-prediction-mode list considered for each reference line in function of the number of available reference lines and of the reference line.

**Table TAB2**

| No of available lines | multiRefldx = 1 | multiRefldx = 3 | multiRefldx = 5 | multiRefldx = 7 | multiRefldx = 12 | Total |
|---|---|---|---|---|---|---|
| 2 | 10 | 10 | | | | 20 |
| 4 | 10 | 6 | 2 | 2 | | 20 |
| 5 | 10 | 4 | 2 | 2 | 2 | 20 |

In table TAB2, if two reference lines are available, "10" intra prediction modes are considered for the reference line "1" and "10" intra prediction modes are considered for the reference line "3". If "4" reference lines are available, "10" intra prediction modes are considered for the reference line "1", "6" intra prediction modes are considered for the reference line "3", "2" intra prediction modes are considered for reference line "5" and "2" intra prediction modes are considered for reference line "7". If "5" reference lines are available, "10" intra prediction modes are considered for the reference line "1", "4" intra prediction modes are considered for the reference line "3", "2" intra prediction modes are considered for reference line "5", "2" intra prediction modes are considered for reference line "7" and "2" intra prediction modes are considered for reference line "12".

For example, if the number of available lines is "2", the TMRL candidate list is as follows: ((r1,v1), (r1, v2),....,(r1,v10), (r2,v1)..., (r2, v10)). If the number of available lines is "5", the TMRL candidate list is as follows: ((r1,v1), (r1, v2),....(r1,v10),(r2, v1), ..., (r2,v4), (r3,v1), (r3, v2), (r4,v1), (r4, v2), (r5,v1), (r5, v2)).

In a second embodiment of step 804, the processing module loops over the intra prediction modes of the intra-prediction-mode list in ascending order of SAD and for each intra prediction mode, loops over the reference lines from the nearest reference line to the furthest reference line until obtaining "20" TMRL candidates. Again, the number of intra prediction modes per reference line illustrated by table TAB2 applies. In that case, TMRL candidate list is follows when the number of reference lines is "2": ((r1, v1), (r2,v1), (r1, v2), (r2,v2),...(r1,v10), (r2, v10)). Similarly, when the available number of reference lines is "5", the TMRL candidate list is as follows: ((r1,v1), (r2,v1), (r3,v1), (r4,v1), (r5,v1), ..., (r1,v4), (r2,v4), (r3,v4), (r4,v4), (r5, v4)).

In a third embodiment of step 804, the TMRL candidates are arranged in an adaptive manner where the TMRL candidate list can be constructed as in the first or the second embodiment, depending on relative values of the SAD associated with the template predictions. For example, if *SAD2* > 2 * *SAD1,* where *SAD1* and *SAD2* are associated with intra prediction modes v1 and v2 respectively, then the method of the second embodiment of step 804 is preferred as it means that the intra prediction mode v1 is much more likely than other intra prediction modes v2,...v10. Therefore, it makes sense to arrange the candidates by pairing the mode v1 with all available reference lines. On the other hand, if *SAD1* and *SAD2* are close, which means than both intra prediction modes v1 and v2 may be equally likely, it makes sense to arrange the candidates as in the first embodiment of step 804, by looping on the reference lines and pairing each reference line with each (or a part of the) intra prediction mode(s). In a variant of the third embodiment of step 804, other SADs in addition to *SAD1* and *SAD2* may be used to arrange the candidates.

In a fourth embodiment of step 804, probabilities of the TMRL candidates can be estimated as relative frequencies of use of TMRL candidates in actual TMRL tables computed offline on a large set of pictures and then TMRL list can be generated by listing the best "20" candidates in the order of decreasing probabilities.

When applied on an encoder side, step 804 is followed by a step 805 during which the processing module determines the best TMRL predictor from the TMRL candidates of the TMRL candidate list. The best TMRL candidate is then compared to predictors provided by other prediction modes that can be applied to the current block and the prediction mode offering the best RD performance is selected and signaled. If the TMRL mode is selected for the current block, a flag indicating a use of the TMRL mode (i.e., A TMRL Flag) by the current block is set to "1" and an index of the TMRL candidate providing the best TMRL predictor is signaled.

On a decoder side, the process of FIG. 8 is applied when it is signaled by the TMRL flag that the current block uses the TMRL mode. In that case, an index of a TMRL candidate in the list of TMRL candidates is decoded. Step 804 is followed by a step 805 during which, the processing module generates a predictor for the current block based on the TMRL candidate corresponding to the index.

In a variant of the first embodiment of the alternative method for generating a TMRL candidate list, the TMRL candidate list's size can be made smaller than "20", for example, "16".

In a variant of the first embodiment of the alternative method for generating a TMRL candidate list, only "4" reference lines, i.e., reference line 1, reference line 3, reference line 5, and reference line 7, are considered for generating the TMRL candidate list.

In a variant of step 801, the primary DIMD mode and the first DIMD blend mode are omitted during the creation of the intra-prediction-mode list which avoids an execution of the DIMD process.

In TIMD, a template size of "2" (i.e., tW = 2 or tH =2 ) is generally used for 4x4 and 8x8 blocks and a template size of "4" (i.e.,tW=4 or tH=4) is generally used for 16x16 and larger blocks. In a variant of step 802, a template size of "1" (i.e., tW = 1 or tH =1 ) is used for all sizes of blocks. In this case, the TIMD prediction is similar to the TMRL prediction with the first line only except that TIMD prediction includes position dependent pixel compensation (PDPC) if applicable and the distortion can be SATD instead of SAD. In that sense, a further reduction of the complexity may be obtained by reducing the list of reference lines to the reference line 1 only for TMRL template prediction. After the prediction, the modes are sorted in increasing order of SAD score. Then the TMRL list can be created as in the first embodiment by pairing the modes with other available reference lines so that the TMRL list has finally "20" candidates.

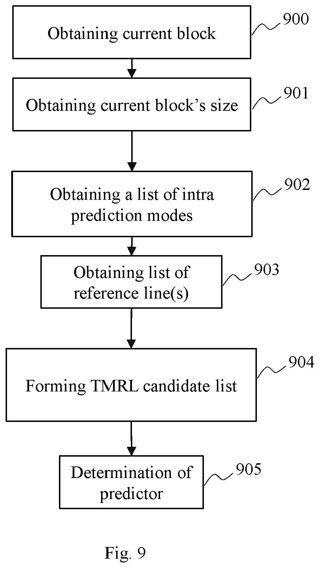

**FIG. 9** illustrates schematically a second embodiment of an alternative method for generating a TMRL candidate list.

The method of FIG. 9 is executed by the processor 110 when implementing the encoding process of FIG. 3 or by the processor 110 when implementing the decoding process of FIG. 4 or by the encoder 130 implementing the encoding process of FIG. 3 or the decoder 130 implementing the decoding process of FIG. 4. In the following the processor 110, the encoder 130 and the decoder 130 are simply called the *processing module.*

In the second embodiment, the original process of TMRL candidate list creation is maintained but the number of reference lines, the number of intra prediction modes and the total number of TMRL candidates in the TMRL candidate list depend on the size of the current block. Table TAB3 below shows the number of reference lines and modes used for an example case.

**Table TAB3**

| Block size (WxH) | multiRefldx | No of prediction modes | TMRL candidate list size |
|---|---|---|---|
| 4x4, 4x8, 8x4, 8x8 | 1, 3 | 4 | 8 |
| 4x16, 16x4, 4x32, 32x4, 8x16, 16x8, 8x32, 32x8 | 1, 3 | 8 | 16 |
| 4x64, 64x4, 8x64, 64x8, 16x16, 16x32,32x16 | 1, 3, 5, 7 | 8 | 16 |
| 16x64,64x16,32x32, 32x64,64x32, 64x64 | 1, 3, 5, 7, 12 | 10 | 20 |

In a step 900, the processing module obtains a current block of a picture.

In a step 901, the processing module obtains a size of the block.

In a step 902, the processing module obtains an intra-prediction-mode list. To do so, the process of generating an intra-prediction-mode list of TMRL is applied, however, with variable a number of intra prediction modes *N_IntraModes* depending on the block size (as in the example of table TAB3). In other words, (1) the PLANAR mode is excluded from the intra-prediction-mode candidate list (2) DC mode is added after "5" neighboring PUs' modes and DIMD modes if it is not included , (3) angular modes (already listed) with delta angles from ±1 to ±4 (compared the existing angular modes in the intra-prediction-mode candidate list) are added if the list of modes has less than *N_IntraModes* candidates. If the intra-prediction-mode candidate list's size is still less than *N_IntraModes,* modes from a default list of "21" intra modes, which are used to construct a primary most probable mode (MPM) list and a secondary MPM list (see section 3.1.3 of document JVET-AI2025), are added to the list if not already included.

In a step 903, the processing module obtains a list of reference lines of size *N_RefLines.* The list of reference lines of size *N_RefLines* depends on the block size. This list of reference lines is for example provided by table TAB3.

In a step 904, the processing module creates a TMRL candidate list based on the intra-prediction-mode list of size *N_IntraModes* and on the list of reference lines applying a process similar to the process of TMRL.

With *NRefLines* reference lines and *N_IntraModes* intra prediction modes, there are *N_RefLines* × *N_IntraModes* possible combinations of the one reference line and one intra-prediction mode for the current block. As in the TMRL process, the area covered by reference line "0" is used for template matching. For each combination, a SAD is computed between the predictions of the template obtained from the combination and the template. Only the first *N_comb* combinations with the least SAD cost are kept from the combinations in an ascending order to form the TMRL candidate list. The number of combinations *N_comb,* which corresponds to the number of TMRL candidate in the TMRL candidate list, depends on the block size, as can be seen for example in table TAB3.

As an example, when the block size is 4x4, the intra-prediction-mode list comprises "4" intra prediction modes. The list of reference lines comprises reference lines 1 and 3. A TMRL candidate list of size "8" is generated.

As another example, when the block size is 16x16, the intra-prediction-mode list comprises "8" intra prediction modes. The list of reference lines comprises reference lines 1, 3, 5 and 7. A TMRL candidate list of size "16" is generated.

When applied on an encoder side, step 904 is followed by a step 905 during which the processing module determines the best TMRL predictor from the TMRL candidates of the TMRL candidate list. The best TMRL candidate is then compared to predictors provided by other prediction modes that can be applied to the current block and the prediction mode offering the best RD performance is selected and signaled. If the TMRL mode is selected for the current block, a flag indicating a use of the TMRL mode (i.e., A TMRL Flag) by the current block is set to "1" and an index of the TMRL candidate providing the best TMRL predictor is signaled.

On a decoder side, the process of FIG. 9 is applied when it is signaled by the TMRL flag that the current block uses the TMRL mode. In that case, an index of a TMRL candidate in the list of TMRL candidates is decoded. Step 904 is followed by a step 905 during which, the processing module generates a predictor for the current block based on the TMRL candidate corresponding to the index.

As the size of the TMRL candidate list depends on the block size, the coding scheme for the candidate index may be changed. For a list with "8" TMRL candidates, an example of encoding table is provided by table TAB4. In this table, the index of a TMRL candidate is encoded in the form of a prefix and a suffix.

**Table TAB4**

| Index | Bin string (prefix) | Bin string (suffix) |
|---|---|---|
| 0 | 0 | 00 |
| 1 | 0 | 01 |
| 2 | 0 | 10 |
| 3 | 0 | 11 |
| 4 | 1 | 00 |
| 5 | 1 | 01 |
| 6 | 1 | 10 |
| 7 | 1 | 11 |

For a list with "16" TMRL candidates, an example of encoding table is provided by table TAB5.

**Table TAB5**

| Index | Bin string (prefix) | Bin string (suffix) |
|---|---|---|
| 0 | 0 | 00 |
| 1 | 0 | 01 |
| 2 | 0 | 10 |
| 3 | 0 | 11 |
| 4 | 10 | 00 |
| ... | ... | ... |
| 14 | 111 | 10 |
| 15 | 111 | 11 |

For blocks using a TMRL candidate list of size "20", the binarization scheme given earlier in Table TAB1 may be used.

In a variant of the second embodiment of an alternative method for generating a TMRL candidate list, no DIMD mode is considered during the generation of the intra-prediction-modes candidates.

In a variant of the second embodiment, at least one of the number of intra prediction modes *N_IntraModes,* the number of reference lines *N_RefLines* and the number of combinations *N_comb* depend on the current block size.

In the third embodiment of an alternative method for generating a TMRL candidate list, the second embodiment is combined with the first embodiment. It amounts at applying the first embodiment with a size of the intra-prediction-mode list, a size of the list of reference lines and a number of TMRL candidates in the TMRL candidate list adapted to the size of the current block. The coding of the TMRL candidate index is done as in proposal 2.

In a variant of the third embodiment of an alternative method for generating a TMRL candidate list, no DIMD mode is considered during the generation of the intra-prediction-modes candidates.

In a variant of the second and third embodiment of the alternative method for generating a TMRL candidate list, only "4" reference lines, i.e., reference line 1, reference line 3, reference line 5, and reference line 7, are considered for generating the TMRL candidate list.

In a variant of the previous embodiments of the alternative method for generating a TMRL candidate list, the availability of the TMRL mode is indicated by signaling a syntax element in the slice header, or the picture header, or the sequence header.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining (800) a current block of a picture;
deriving (801) a first list of a first number of intra prediction modes;
generating (802) a prediction of a template of samples in a neighborhood of the current block for each intra prediction mode of the first list;
for each predictor, obtaining (803) a prediction error between the predictor and the template;
obtaining (804) a second list of reference lines in a neighborhood of the current block and forming a TMRL list of a second number of template based multiple reference lines (TMRL) candidates by browsing the intra prediction modes of the first list in ascending order of the prediction error and browsing the reference lines of the second list from a nearest reference line to a furthest reference line, each TMRL candidate of the TMRL list comprising an intra prediction mode extracted from the first list during the browsing of the first list and a reference lines extracted from the second list extracted during the browsing of the second list; and,
determining (805) a TMRL predictor for the current block from the TMRL candidates of the TMRL list.

2. A device comprising electronic circuitry configured for:
obtaining (800) a current block of a picture;
deriving (801) a first list of a first number of intra prediction modes;
generating (802) a prediction of a template of samples in a neighborhood of the current block for each intra prediction mode of the first list;
for each predictor, obtaining (803) a prediction error between the predictor and the template;
obtaining (804) a second list of reference lines in a neighborhood of the current block and forming a TMRL list of a second number of template based multiple reference lines (TMRL) candidates by browsing the intra prediction modes of the first list in ascending order of the prediction errors and browsing the reference lines of the second list from a nearest reference line to a furthest reference line, each TMRL candidate of the TMRL list comprising an intra prediction mode extracted from the first list during the browsing of the first list and a reference lines extracted from the second list extracted during the browsing of the second list; and,
determining (805) a TMRL predictor for the current block from the TMRL candidates of the TMRL list.

3. The method of claim 1 or the device of claim 2 wherein, the forming of the TMRL list comprises looping over the reference lines of the second list from the nearest reference line to the furthest reference line and for each reference line, looping over the intra prediction modes of the second list in ascending order of the prediction errors until obtaining the second number of TMRL candidates.

4. The method of claim 1 or the device of claim 2 wherein, the forming of the TMRL list comprises looping over the intra prediction modes of the first list in ascending order of the prediction errors and for each intra prediction mode, looping over the reference lines from the nearest reference line to the furthest reference line until obtaining the second number of TMRL candidates.

5. The method of claim 1, 3 or 4 or the device of claim 2, 3 or 4 wherein, a third number of intra prediction modes browsed in the first list for forming the TMRL candidates depends on a fourth number of available reference lines and on the reference lines.

6. The method of any previous claims 1 and 3 to 5 or the device of any previous claims 2 to 5 wherein the forming of the TMRL list is based on relative values of the prediction errors of the intra prediction modes of the first list.

7. The method of claim 1 or the device of claim 2 wherein the forming of the TMRL list is based on probabilities of TMRL candidates determined offline in function of frequencies of use of the TRML candidates.

8. The method of any previous claim 1 and 3 to 7 or the device of any previous claim 2 to 7 wherein at least one of the first number, the second list of reference lines and the second number depends on a size of the current block.

9. A method comprising:
obtaining (900) a current block of a picture;
obtaining (901) a size of the current block;
deriving (902) a first list of a first number of intra prediction modes;
obtaining (903) a second list of a second number of supplemental reference lines in a neighborhood of the current block, the supplemental reference lines of the second list being different from a closest reference line in the neighborhood of the current block;
for each combination of an intra prediction mode of the first list and a supplemental reference line of the second list, computing a prediction error between the closest reference line and a predictor of the closest reference line obtained from the intra prediction mode and the supplemental reference line of the combination; and forming (904) a template based multiple reference lines (TMRL) list of a third number of TMRL candidates by keeping a third number of combinations with the least prediction errors; and
determining (905) a TMRL predictor for the current block from the TMRL candidates of the TMRL list;
wherein at least one of the first number, the second list and the third number depends on the size of the current block.

10. A device comprising electronic circuitry configured for:
obtaining (900) a current block of a picture;
obtaining (901) a size of the current block;
deriving (902) a first list of a first number of intra prediction modes;
obtaining (903) a second list of a second number of supplemental reference lines in a neighborhood of the current block, the supplemental reference lines of the second list being different from a closest reference line in the neighborhood of the current block;
for each combination of an intra prediction mode of the first list and a supplemental reference line of the second list, computing a prediction error between the closest reference line and a predictor of the closest reference line obtained from the intra prediction mode and the supplemental reference line of the combination; and forming (904) a template based multiple reference lines (TMRL) list of a third number of TMRL candidates by keeping a third number of combinations with the least prediction errors; and
determining (905) a TMRL predictor for the current block from the TMRL candidates of the TMRL list;
wherein at least one of the first number, the second list and the third number depends on the size of the current block.

11. The method of claim 9 or the device of claim 10 wherein the combinations of the TMRL list are sorted in ascending order of their prediction errors.

12. The method of any previous claim 1, 3 to 9 and 11 or the device of any previous claim 2 to 9 and 11 wherein no decoder side intra mode derivation (DIMD) intra prediction modes is used for forming the TMRL list.

13. The method of any previous claim 1, 3 to 9 and 11 to 12 or the device of any previous claim 2 to 9 and 11 to 12 wherein a use of a TMRL predictor is enabled by signaling a syntax element in a slice header, or a picture header, or a sequence header.

14. Non-transitory information storage medium storing program code instructions for implementing the method of any previous claim 1, 3 to 9 and 11 to 12.

15. A computer program comprising program code instructions for implementing the method of any previous claim 1, 3 to 9 and 11 to 12.
